Europäisches Patentamt

European Patent Office

Office européen des brevets

(11) Veröffentlichungsnummer: **0 402 712**
**A1**

## (12) EUROPÄISCHE PATENTANMELDUNG

(21) Anmeldenummer: **90110411.7**

(22) Anmeldetag: **01.06.90**

(51) Int. Cl.5: **A01C 17/00**

(30) Priorität: **14.06.89 DE 3919396**

(43) Veröffentlichungstag der Anmeldung:
**19.12.90 Patentblatt 90/51**

(84) Benannte Vertragsstaaten:
**DE DK FR GB NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Dreyer, Heinz, Dr. Dipl.-Ing.**
**Am Amazonenwerk 7**
**D-4507 Hasbergen(DE)**

(54) **Zentrifugaldüngerstreuer.**

(57) Zentrifugaldüngerstreuer mit einem Dosierorgane aufweisenden Vorratsbehälter, unter denen Wurfschaufeln aufweisende Schleuderscheiben angeordnet sind, wobei die Wurfschaufeln mittels eines Schnellverschlusses leicht abnehmbar auf den Schleuderscheiben angeordnet sind. Um auf einfache Weise den Zentrifugaldüngerstreuer so weiter zu bilden, daß auf einfache Weise eine Abdrehprobe durchführbar ist, ist vorgesehen, daß nach der Abnahme der Wurfschaufeln (5, 6) von den Schleuderscheiben (3, 4) zum Zwecke des Abdrehens ein Auffangbehälter (32) unterhalb der Schleuderscheiben (3) angeordnet ist.

FIG 2

EP 0 402 712 A1

## Zentrifugaldüngerstreuer

Die Erfindung betrifft einen Zentrifugaldüngerstreuer gemäß des Oberbegriffes des Patentanspruches 1.

Ein derartiger Zentrifugaldüngerstreuer ist beispielsweise durch die DE-OS 34 13 944 bekannt. Bei diesem Zentrifugaldüngerstreuer sind die Wurfschaufeln auf den Schleuderscheiben mittels eines Schnellverschlusses leicht abnehmbar angeordnet, um unterschiedliche Streuschaufeln anordnen zu können.

Der Erfindung liegt die Aufgabe zugrunde, auf einfache Weise den Zentrifugaldüngerstreuer so weiter zu bilden, daß auf einfache Weise eine Abdrehprobe durchführbar ist.

Diese Aufgabe wird erfindungsgemäß dadurch gelöst, daß nach Abnahme der Wurfschaufeln von den Schleuderscheiben zum Zwecke des Abdrehens ein Auffangbehälter unterhalb der Schleuderscheibe angeordnet ist. Infolge dieser Maßnahme wird auf einfache Weise die Grundvoraussetzung dafür geschaffen, daß auf einfache und kostengünstige Weise, ohne aufwendigen Auffangbehälter, das Abdrehen bzw. die Mengenkontrolle durchzuführen ist, indem nämlich einfach ein Auffangbehälter unterhalb der Schleuderscheibe angeordnet wird. Da die Wurfschaufeln bei der Abdrehprobe bzw. Mengenkontrolle von den Schleuderscheiben abgenommen sind, wird das den Schleuderscheiben zudosierte Material nur unwesentlich beschleunigt, so daß es mit geringer Geschwindigkeit von den Schleuderscheiben abläuft. Es braucht dann nur an der Ablaufstelle unterhalb der Schleuderscheiben der Auffangbehälter angeordnet werden.

Desweiteren ist es auf einfache Weise möglich, daß die mittels eines Schnellverschlusses leicht abnehmbaren sowie leicht montierbaren Wurf-schaufeln gegen andere, beispielsweise Grenz-streuschaufeln oder eine andere wirksame Länge aufweisenden Wurfschaufeln austauschbar sind. Hierdurch ist es auf einfachste Weise möglich, den Zentrifugaldüngerstreuer für die vielfältigsten Einsatzzwecke optimal auszurüsten, indem jeweils die optimalsten Wurfschaufeln leicht montierbar sind. Auch ist es möglich, daß die Wurfschaufeln winkelverschwenkbar und in unterschiedlichen Positionen anhand von Skalen auf der Schleuderscheibe einstellbar angeordnet sind. Somit lassen sich sehr gleichmäßige Streubilder bei den verschiedenen Wurfweiten und beim Ausbringen unterschiedlichster Düngersorten erzielen. Um die Wurfschaufeln immer einsatzbereit für den Zentrifugaldüngerstreuer beim Einsatz bereitzuhalten, ist erfindungsgemäß vorgesehen, daß am Rahmen oder Vorratsbehälter Halterungen für die "anderen" auszuwech-selnden Wurfschaufeln vorgesehen sind.

In einfachster Weise kann der Schnellverschluß derart ausgebildet sein, daß die Wurfschaufeln mit-tels Bolzen, beispielsweise Schraubbolzen oder Klemmbolzen auf den Schleuderscheiben befestigt sind, daß sich in der Schleuderscheibe und/oder in den Wurfschaufeln jeweils zumindest eine Erweiterung aufweisende Löcher befinden, wobei die Erweiterung zumindest die Größe des Kopfes oder der Mutter des Bolzens aufweist. Um auf optimale Weise die Abdrehprobe oder Mengenkontrolle durchzuführen, sind die Maßnahmen gemäß des Anspruches 9 vorgesehen. Hierdurch wird in jedem Falle sichergestellt, daß mittels des Führungsschirmes es verhindert wird, daß die der Schleuderscheibe zudosierten Düngemittelpartikel nicht von den Wurfschaufeln der anderen Schleuderscheibe erfaßt werden und somit sicher dem Auffangbehälter zugeleitet werden.

Eine vorteilhafte Weiterbildung der Abdrehvorrichtung wird durch die Maßnahmen gemäß der Ansprüche 10 bis 17 erreicht.

Weitere Einzelheiten der Erfindung sind den übrigen Unteransprüchen, der Beispielsbeschreibung und den Zeichnungen zu entnehmen. Hierbei zeigen

Fig. 1 einen erfindungsgemäß ausgebildeten Schleuderstreuer in der Ansicht von hinten und in schematischer Darstellungsweise,

Fig. 2 den Schleuderstreuer gemäß Fig. 1, jedoch mit abgenommenen Wurfschaufeln auf der rechten Schleuderscheibe sowie mit der erfindungsgemäßen Abdrehvorrichtung,

Fig. 3 die Anordnung der Abdrehvorrichtung an dem Schleuderdüngerstreuer in der Ansicht III-III und in vergrößerter Darstellungsweise,

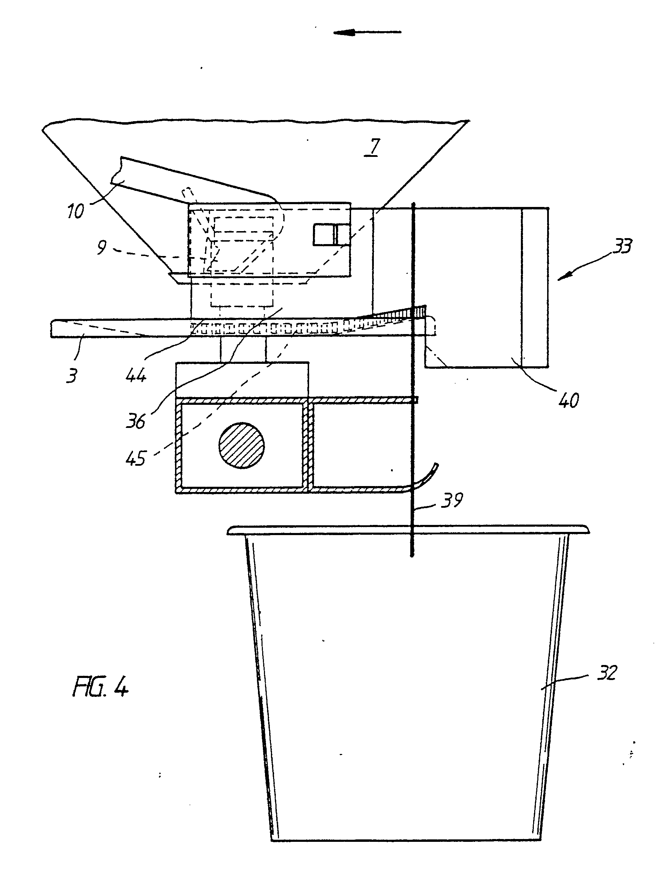

Fig. 4 die Anordnung der Abdrehvorrichtung gemäß der Ansicht IV-IV in vergrößerter Darstellung,

Fig. 5 die Anordnung der Wurfschaufeln auf einer Schleuderscheibe, hier der rechten Schleuderscheibe in Draufsicht gesehen und in vergrößerter Darstellung

Fig. 6 die Anordnung der Wurfschaufel auf der Schleuderscheibe in der Ansicht VI-VI,

Fig. 7 die Einheiten X in vergrößerter Darstellung und

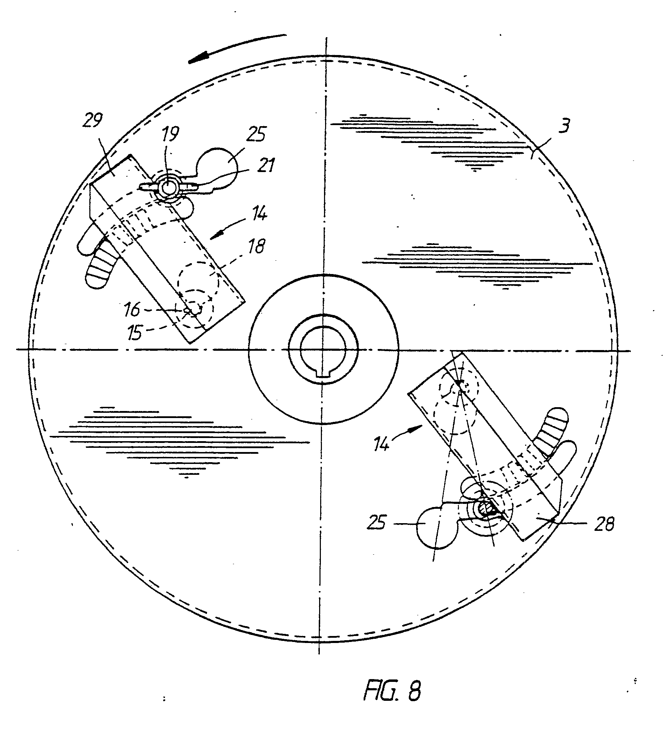

Fig. 8 die Schleuderscheibe gemäß Fig. 5, wobei die Wurfschaufeln gegen Grenzstreuscheiben ausgetauscht sind.

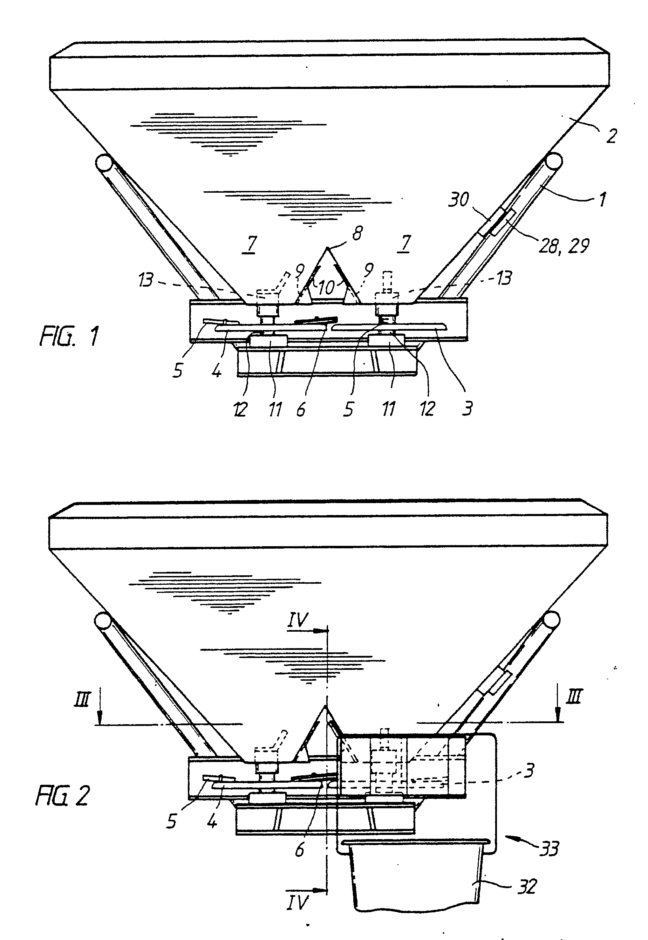

Der Zentrifugaldüngerstreuer gemäß Fig. 1 weist den Rahmen 1, den Vorratsbehälter 2 und die im entgegengesetzen Drehsinn angetriebenen Schleuderscheiben 3 und 4 auf. Auf den Schleuderscheiben 3 und 4 sind jeweils die Wurfschaufeln 5 und 6 angeordnet. Der Vorratsbehälter 2 weist in seinem unteren Bereich die beiden Auslauftrichter 7 auf. Zwischen den beiden Auslauftrichtern 7 ist das dachförmige Mittelteil 8 angeordnet. In diesem dachförmigen Mittelteil 8 sind die Auslauföffnungen 9 angeordnet, deren Öffnungsweite über die Schieber 10 einzustellen sind. An dem unteren Rahmenteil des Rahmens 1 sind die Getriebe 11 befestigt. Aus dem Getriebe 11 ragen die Antriebswellen 12 heraus, mittels welcher die Schleuderscheiben 3 und 4 in dem zueinander entgegengesetzten Drehsinn angetrieben werden. Die Antriebswelle 12 ist jeweils bis in den Auslauftrichter 7 hineingeführt und trägt am oberen Ende die Rühreinrichtung 13.

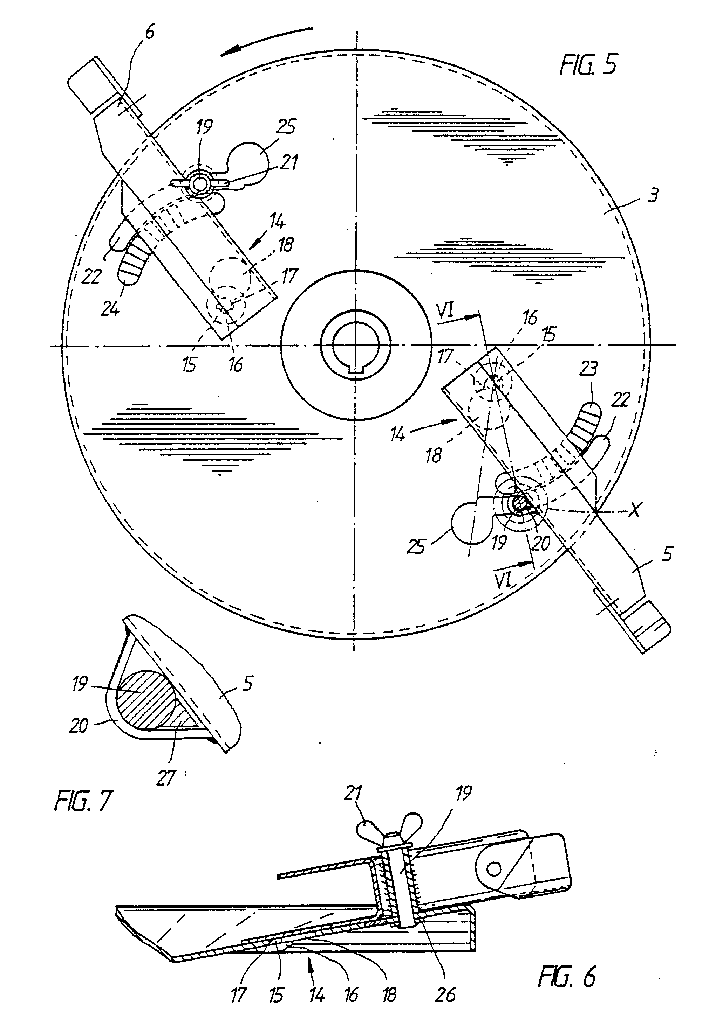

Die Wurfschaufeln 5 und 6 sind, wie die Fig. 5 und 6 zeigen, mittels des Schnellverschlusses 14 auf der Schleuderscheibe 3 montiert. Der Schnellverschluß 14 weist den Bolzen 15 auf, der an seinem unteren Ende mit dem Kopf 16 versehen ist. In der Schleuderscheibe 3 befindet sich das Loch 17 mit der Erweiterung 18. Die Erweiterung 18 des Loches 16 weist zumindest die Größe des Kopfes 16 des Bolzen 15 auf. Mittels dieses Bolzens 15 ist jede Wurfschaufel 5 und 6 im inneren Bereich der Scheuderscheibe auf der Schleuderscheibe 3 befestigt. Des weiteren ist in einem Abstand zu dem Bolzen 15 nach außen gesehen, ein weiterer Schraubbolzen 19 des Schnellverschlusses 14 zur Befestigung der Wurfschaufeln 5 bzw. 6 auf der Schleuderscheibe 3 vorgesehen. Dieser jeweilige Schraubbolzen 19 ist jeweils durch eine an der Wurfschaufel 5 und 6 jeweils befindliche U-förmige Lasche 20 gesteckt. Auf der Oberseite der Lasche 20 ist auf den Schraubbolzen 19 die Flügelmutter 21 aufgeschraubt, mittels welcher die Wurfschaufel 5 bzw. 6 auf der Schleuderscheibe 3 festgeklemmt wird. Der Schraubbolzen 19 befindet sich in dem in der Schleuderscheibe 3 angeordneten Langloch 22. Im Bereich des Langloches 22 befindet sich die Skala 23, welche der Wurfschaufel 5 zugeordnet ist und die Skala 24, welcher der Wurfschaufel 6 zugeordnet ist. Diese Skalen 23 und 24 sind unterschiedlich, also unverwechselbar bezeichnet, so daß die Wurfschaufeln 5 und 6 anhand einer Tabelle immer automatisch richtig eingestellt werden. Die Wurfschaufeln 5 und 6 sind um den Bolzen 15 jeweils winkelverschwenkbar auf der Schleuderscheibe 3 angeordnet. Es sind also bei den winkelverschwenkbaren Wurfschaufeln 5 und 6 in der Schleuderscheibe jeweils mit dem Radius entsprechende gekrümmte Langlöcher 22 vorgesehen. An dem einen Ende des Langloches 22 ist jeweils eine Erweiterung 25 des Langloches 22 vorgesehen. Diese Erweiterung 25 weist zumindest die Größe des Kopfes 26 des Schraubbolzens 19 auf. Die innere Befestigung der Wurfschaufeln 5 bzw. 6 auf der Schleuderscheibe 3 ist durch den Bolzen 15, des Kopfes 16 und der Erweiterung 18 als Einhack- oder Einklingvorrichtung ausgebildet. Die äußere Befestigung der Wurfschaufeln 5 und 6 ist als Schraub- oder Klemmverbindung vorgesehen, wobei aus Gründen der einfachen Handhabung der Kopf 26 des Schraubbolzens 19 ebenfalls durch die Erweiterung 25 in das Langloch 22 eingehackt werden kann.

Über die Erweiterung 18 bzw. 25 läßt sich so die Wurfschaufel 5 und 6 einfach von der Schleuderscheibe 3 abnehmen oder montieren (Schnellverschuß 14).

Der Schraubbolzen 19 weist den Ansatz 27 auf, der an der Lasche 20 zur Anlage kommt. Der Ansatz 27 ist als Verdrehsicherung ausgebildet, so daß, ohne daß die Gefahr des Verdrehens des Schraubbolzens 19 besteht, die Flügelmutter 21 gedreht und somit die Klemmverbindung angezogen oder gelöst werden kann.

An Stelle der Wurfschaufeln 5 und 6 können auf der Schleuderscheibe 3 die als Grenzstreuschaufeln ausgebildeten Wurfschaufeln 28 und 29 mittels des Schnellverschlusses 14 angeordnet werden. Damit die jeweiligen Wurfschaufeln immer einsatzbereit, also auch auf dem Feld vorhanden sind, ist an dem Vorratsbehälter 2 die Halterung 30 angeordnet, an welcher die jeweiligen Wurfschaufeln 28, 29 oder wenn die Wurfschaufeln 28, 29 auf den Schleuderscheiben montiert sind, die Wurfschaufeln 5 und 6 befestigt werden können. Entsprechend der erforderlichen Anzahl von Wurfschaufeln ist die Halterung 30 ausgebildet.

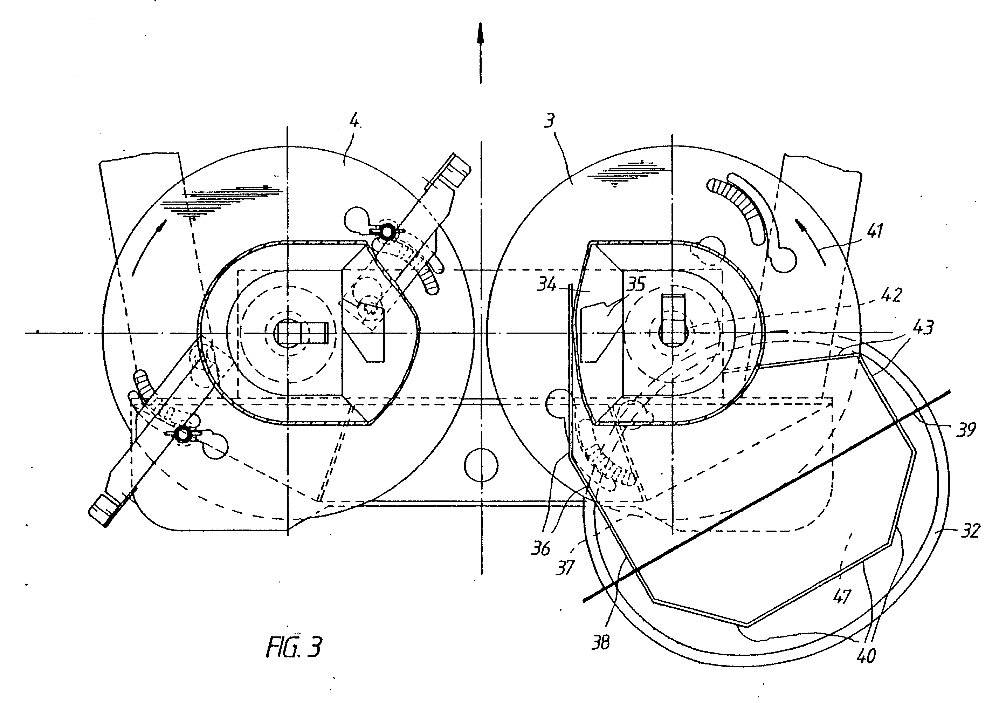

Nach Abnahme der Wurfschaufeln 5 und 6 von der Schleuderscheibe 3 ist zum Zwecke des Abdrehens oder der Mengenkontrolle unterhalb der Schleuderscheibe 3 der Auffangbehälter 32 gemäß Fig. 2 anzuordnen. Unter Mengenkontrolle wird die Ermittlung der vom Dosiermechanismus, der von den Auslauföffnungen 9 und den Schiebern 10 gebildet wird, der Schleuderscheibe 3 zudosierten Menge pro Flächeneinheit verstanden. Um eine sichere Leitung des Düngers von der Auslauföffnung 9 über die Schleuderscheibe 3 in den Auffangbehälter 32 zu gewährleisten, ist im Bereich der Schleuderscheibe 3 die Düngerauffangvorrichtung 33 gemäß Fig. 2 an dem Zentrifugaldüngerstreuer angeordnet. Die Düngerauffangvorrichtung 33 weist im äußeren Bereich 34 der Dosiervorrichtung 35, die von der Auslauföffnung 9 und dem Schieber 10 gebildet wird, einen auf der Schleuderscheibe 3 zumindest annähernd aufliegenden bzw. dicht oberhalb der Schleuderscheibe 3 befindlichen und sich von vorne nach hinten erstreckenden Führungsschirm 36 auf, der hinten über den Schleuderscheibenrand 37 übersteht. Unterhalb der Schleuderscheibe 3 und dem Ende 38 des Führungsschirmes 36 ist der Auffangbehälter 32 angeordnet. Dieser Auffangbehälter 32 ist über den Bügel 39 an der Düngerauffangvorrichtung 33 aufgehängt. An dem Ende 38 des Führungsschirmes 36 schließt sich im Abstand zu dem Schleuderscheibenrand 37 der Leitschirm 40 an, der etwa bogenförmig um ein Teil der Schleuderscheibe 3 geführt wird. Des weiteren ist in Drehrichtung 41 der Schleuderscheibe 3 gesehen, in einem Abstand von etwa 1/5 bis 1/3 des Umfanges eine sich von der Schleuderscheibennabe 42 in etwa radialer oder in einem spitzen Winkel von der Radialen abweichenden Richtung bis über den Schleuderscheibenrand 37 nach außen sich erstreckende Düngerleitwand 43 angeordnet, welche mit ihrem unteren Rand auf der Schleuderscheibe 3 zumindest annähernd aufliegt bzw. sich bis dicht oberhalb der Schleuderscheibe 3 erstreckt. Die Düngerableitwand 43 schließt sich unmittelbar an den Leitschirm 40 an. Die Düngerabeitwand 43 und der Führungsschirm 36 der Düngerauffangvorrichtung 33 schließt etwa einen Sektor von 1/5 bis 1/3 der Schleuderscheibe 3 ein.

Auf der Unterseite 44 der Düngerableitwand 43 und der Unterseite 44 des Führungsschirmes 36 sind als Bürsten-oder Gummi- bzw. Kunststoffleisten ausgebildete Dichtelemente 45 angeordnet.

In Draufsicht gesehen ist zwischen dem Schleuderscheibenrand 37 und dem Leitschirm 40 eine Öffnung 47 vorgesehen, durch welche der von der Schleuderscheibe 3 durch Zentrifugalkraft und/oder von der Düngerauffangvorrichtung 33, welche von dem Führungsschirm 36 und der Düngerableitwand 43 gebildet wird, abgeleitete Dünger in den Auffangbehälter 32 geleitet wird.

## Ansprüche

1. Zentrifugaldüngerstreuer mit einem Dosierorgane aufweisenden Vorratsbehälter, unter denen Wurfschaufeln aufweisende Schleuderscheiben angeordnet sind, wobei die Wurfschaufeln mittels eines Schnellverschlusses leicht abnehmbar auf den Schleuderscheiben angeordnet sind, dadurch gekennzeichnet, daß nach der Abnahme der Wurfschaufeln (5, 6, 28, 29) von den Schleuderscheiben (3, 4) zum Zwecke des Abdrehens ein Auffangbehälter (32) unterhalb der Schleuderscheiben (3) angeordnet ist.

2. Zentrifugaldüngerstreuer mit einem Dosierorgane aufweisenden Vorratsbehälter, unter denen Wurfschaufeln aufweisende Schleuderscheiben angeordnet sind, wobei die Wurfschaufeln mittels eines Schnellverschlusses leicht abnehmbar auf den Schleuderscheiben angeordnet sind, insbesondere nach Anspruch 1, dadurch gekennzeichnet, daß die mittels eines Schnellverschlusses (14) leicht abnehmbaren sowie leicht montierbaren Wurfschaufeln (5, 6) gegen andere, beispielsweise Grenzstreuschaufeln (28, 29) oder eine andere wirksame Länge aufweisenden Wurfschaufeln austauschbar sind.

3. Zentrifugaldüngerstreuer nach einem oder mehreren der vorstehenden Ansprüche, dadurch gekennzeichnet, daß die Wurfschaufeln (5, 6, 28, 29) winkelverschwenkbar und in unterschiedlichen Positionen anhand von Skalen (23, 24) auf der Schleuderscheibe (3, 4) einstellbar ausgebildet sind.

4. Zentrifugaldüngerstreuer nach einem oder mehreren der vorstehenden Ansprüche, dadurch gekennzeichnet, daß an dem Rahmen (1) oder Vorratsbehälter (2) Halterungen (30) für die "anderen" Wurfschaufeln (28, 29) vorgesehen sind.

5. Zentrifugaldüngerstreuer nach einem oder mehreren der vorstehenden Ansprüche, dadurch gekennzeichnet, daß die Wurfschaufeln (5, 6, 28, 29) jeweils mittels Bolzen (15), beispielsweise Schraubbolzen oder Klemmbolzen auf den Schleuderscheiben (3, 4) befestigt sind, daß sich in der Schleuderscheibe (3, 4) und/oder in den Wurfschaufeln jeweils zumindest eine Erweiterung (18) aufweisende Löcher (17) befinden, wobei die Erweiterung zumindest die Größe des Kopfes (16) oder Mutter des Bolzens (15) aufweist.

6. Zentrifugaldüngerstreuer nach einem oder mehreren der vorstehenden Ansprüche, dadurch gekennzeichnet, daß bei den winkelverschwenkbaren Wurfschaufeln (5, 6, 28, 29) in der Schleuderscheibe (3, 4) ein mit dem Radius entsprechend gekrümmt verlaufendes Langloch (22) vorgesehen ist, wobei vorzugsweise an dem einen Ende des Langloches (22) die Erweiterung (25) vorgesehen ist.

7. Zentrifugaldüngerstreuer nach einem oder mehreren der vorstehenden Ansprüche, dadurch gekennzeichnet, daß für die innere Befestigung der Wurfschaufel jeweils eine Einhak- oder Einklinkvorrichtung zur Befestigung der Wurfschaufel (5, 6, 28, 29) auf der Schleuderscheibe (3, 4) vorgesehen ist, während für die äußere Befestigung der Wurfschaufeln (5, 6, 28, 29) eine Schraub- oder Klemmverbindung zur Befestigung der Wurfschaufel (5, 6, 28, 29) auf der Schleuderscheibe (3, 4) vorgesehen ist.

8. Zentrifugaldüngerstreuer nach einem oder mehreren der vorstehenden Ansprüche, dadurch gekennzeichnet, daß nach Abnahme der Wurfschaufel (5, 6) von einer der Schleuderscheiben (3) im Bereich dieser Schleuderscheiben (3) zur Durchführung der Abdrehprobe oder Mengenkontrolle (Ermittlung der ausgebrachten Menge pro Flächeneinheit) eine Düngerauffangvorrichtung (33) anzuordnen ist.

9. Zentrifugaldüngerstreuer mit einem Rahmen, Vorratsbehälter und zumindest einer rotierend angetriebenen Schleuderscheibe, welcher der auszubringende Dünger über einen Dosiermechanismus in einstellbaren Mengen zugeleitet wird und welche mit auf der Schleuderscheibe abnehmbar angeordneten Wurfschaufeln den zugeleiteten Dünger in Breitverteilung auf der zu bestreuenden Fläche verteilt, wobei zur Durchführung der Abdrehprobe oder Mengenkontrolle (Ermittlung der vom Dosiermechanismus der Schleuderscheibe zudosierten Düngermenge pro Flächeneinheit) nach Abnahme der Wurfschaufeln von zumindest einer Schleuderscheibe im Bereich dieser Schleuderscheibe eine Düngerauffangvorrichtung mit Düngerauffangbehälter angeordnet ist, insbesondere nach Anspruch 1, dadurch gekennzeichnet, daß die Düngerauffangvorrichtung (33) einen im äußeren Bereichder Dosiervorrichtung (35) auf der Schleuderscheibe (3) zumindest annähernd aufliegende bzw. dicht oberhalb der Schleuderscheibe (3) sich befindlichen und von vorn nach hinten erstreckenden Führungsschirm (36) aufweist, der hinten über den Schleuderscheibenrand (37) übersteht, und daß unterhalb der Schleuderscheibe (3) und dem Ende (38) des Führungsschirms (36) der Auffangbehälter (32) angeordnet ist.

10. Zentrifugaldüngerstreuer nach Anspruch 9, dadurch gekennzeichnet, daß sich an dem Ende (38) des Führungsschirmes (36) ein im Abstand zu dem Schleuderscheibenrand (37) angeordneter Leitschirm (40) anschließt, der etwa bogenförmig um einen Teil der Schleuderscheibe (3) geführt ist.

11. Zentrifugaldüngerstreuer nach Anspruch 1 und/oder 9, dadurch gekennzeichnet, daß in Drehrichtung (41) der Schleuderscheibe gesehen in einem Abstand von etwa 1/5 bis 1/3 des Scheibenumfanges zumindest eine sich von der Schleuderscheibennabe (42) in etwa radialer Richtung oder in einem spitzen Winkel von der Radialen abweichenden Richtung bis über den Schleuderscheibenrand (37) nach außen erstreckenden Düngerableitwand (43) der Düngerauffangvorrichtung (33) angeordnet ist, welche mit ihrem unteren Rand auf der Schleuderscheibe (3) zumindest annähernd aufliegt bzw. sich bis dicht oberhalb der Schleuderscheiben (3) erstreckt.

12. Zentrifugaldüngerstreuer nach einem oder mehreren der vorstehenden Ansprüche, dadurch gekennzeichnet, daß die Düngerableitwand (43) sich an dem Leitschirm (40) anschließt.

13. Zentrifugaldüngerstreuer nach einem oder mehreren der vorstehend genannten Ansprüche, dadurch gekennzeichnet, daß die Düngerableitwand (43) und der Führungsschirm (36) einen Sektor von etwa 1/5 bis 1/3 der Schleuderscheibe (3) eingrenzen.

14. Zentrifugaldüngerstreuer nach einem oder mehreren der vorstehend genannten Ansprüche, dadurch gekennzeichnet, daß auf der Unterseite (44) des Führungsschirms (36) und/oder der Düngerableitwand (43) Dichtelemente (45) angeordnet sind, welche auf der Schleuderscheibe (3) zumindest annähernd aufliegen.

15. Zentrifugaldüngerstreuer nach Anspruch 14, dadurch gekennzeichnet, daß das Dichtelement (45) als Bürstenleiste ausgebildet ist.

16. Zentrifugaldüngerstreuer nach Anspruch 14, dadurch gekennzeichnet, daß das Dichtelement (45) als Gummi-oder Kunststoffleiste ausgebildet ist.

17. Zentrifugaldüngerstreuer nach einem oder mehreren der vorstehend genannten Ansprüche, dadurch gekennzeichnet, daß der Leitschirm so angeordnet ist, daß sich in Draufsicht gesehen zwischen dem Schleuderscheibenrand (37) und dem Leitschirm (40) eine Öffnung (47) befindet, durch welche der von der Schleuderscheibe (3) durch Zentrifugalkraft und/oder von der Düngerleitwand (43) abgeleitete Dünger in den Auffangbehälter (32) fällt.

FIG. 1

FIG 2

FIG. 3

EP 0 402 712 A1

FIG. 4

FIG. 5

FIG. 7

FIG. 6

FIG. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 241 982 (VAN DER LELY) <br> * Seite 2, Spalte 2, Zeile 35 - Spalte 7, Zeile 16; Figuren 2-5 * <br><br> --- | 1,8,9, 10,11, 12,13, 14,15 | A 01 C 17/00 |
| A | EP-A-0 292 874 (AMAZONEN-WERKE) <br> * Spalte 2, Zeilen 3-9; Spalte 8, Zeilen 34-40; Spalte 9, Zeilen 38-47; Figur 3 * <br><br> --- | 1,3,5,6 ,7 | |
| D,A | DE-A-3 413 944 (AMAZONEN-WERKE) <br> * Seite 8, Zeilen 4-10,14-22; Seite 9, Zeilen 1-4; Ansprüche 1,10,11; Figuren 11,12 * <br><br> ----- | 1,2,3,4 ,9 | |

| | RECHERCHIERTE SACHGEBIETE (Int. Cl.5) |
|---|---|
| | A 01 C |

Der vorliegende Recherchenbericht wurde für alle Patentansprüche erstellt

| Recherchenort | Abschlußdatum der Recherche | Prüfer |
|---|---|---|
| DEN HAAG | 20-09-1990 | TAMME H.-M.N. |